# EUROPEAN PATENT APPLICATION

(11) **EP 4 477 408 A1**
(43) Date of publication of application: **18.12.2024**
(21) Application number: 24181065.4
(22) Date of filing: 10.06.2024
(51) Int. Cl.: B32B 5/02, B32B 27/12, A47C 27/12, A47C 31/00, B29C 48/05, B32B 5/26

(54) **CUSHION AND SYSTEM AND METHOD OF MANUFACTURE**

(30) Priority: 15.06.2023 US 202363508300 P; 03.11.2023 DK PA202370560; 07.05.2024 US 202418657196
(71) Applicant: Lear Corporation, Southfield, MI 48033 (US)
(72) Inventor: Repke, Eric, Milford, MI, 48380 (US)
(74) Representative: Grünecker Patent- und Rechtsanwälte PartG mbB

(57) **Abstract**

A cushion and system and method of manufacturing a cushion. The cushion includes a layer that is disposed on a side of a filament mesh structure that comprises a set of filaments. Each member of the set of filaments is looped and bonded to at least one other member of the set of filaments. The layer is bonded to at least some members of the set of filaments.

## Description

### CROSS-REFERENCE TO RELATED APPLICATIONS

This application claims the benefit of U.S. provisional application serial no. 63/508,300, filed June 15, 2023, and Denmark patent application no. PA202370560, filed November 3, 2023, the disclosures of which are hereby incorporated in their entirety by reference herein.

### TECHNICAL FIELD

Various embodiments relate to a filament mesh structure, such as a cushion, and a system and method of manufacture.

### BRIEF DESCRIPTION OF THE DRAWINGS

Figure 1 is a perspective view of an example of a seat assembly.
Figure 2 is a perspective view of an example of a cushion of the seat assembly that is a filament mesh structure.
Figure 3 is schematic view of an example of a manufacturing system for making the filament mesh structure.
Figures 4 and 5 are schematic views of examples of a layer dispensing subsystem that dispenses a layer on the filament mesh structure.
Figure 6 is a magnified view of an example of a layer bonded to the filament mesh structure.
Figure 7 is a flowchart of an example of a method of forming the filament mesh structure.
Figure 8 is a plan view of an example of a layer disposed on the filament mesh structure, the layer comprising linear filaments.
Figure 9 is a plan view of an example of a layer disposed on the filament mesh structure, the layer comprising nonlinear filaments.
Figure 10 is a plan view of an example of a layer disposed on the filament mesh structure, the layer comprising contiguous filaments.
Figure 11 is a perspective view of an example of a layer disposed on the filament mesh structure, the layer comprising a film.
Figure 12 is a is a perspective view of an example of a layer disposed on the filament mesh structure, the layer comprising filaments and a film.
Figure 13 is a perspective view of an example of a layer disposed on multiple sides of the filament mesh structure.
Figure 14 is a perspective view of an example of a layer disposed on all sides of the filament mesh structure and a port that is provided in the layer.
Figures 15a-15c illustrate an example of dispensing the layer on multiple sides of the filament mesh structure by rotating the filament mesh structure.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

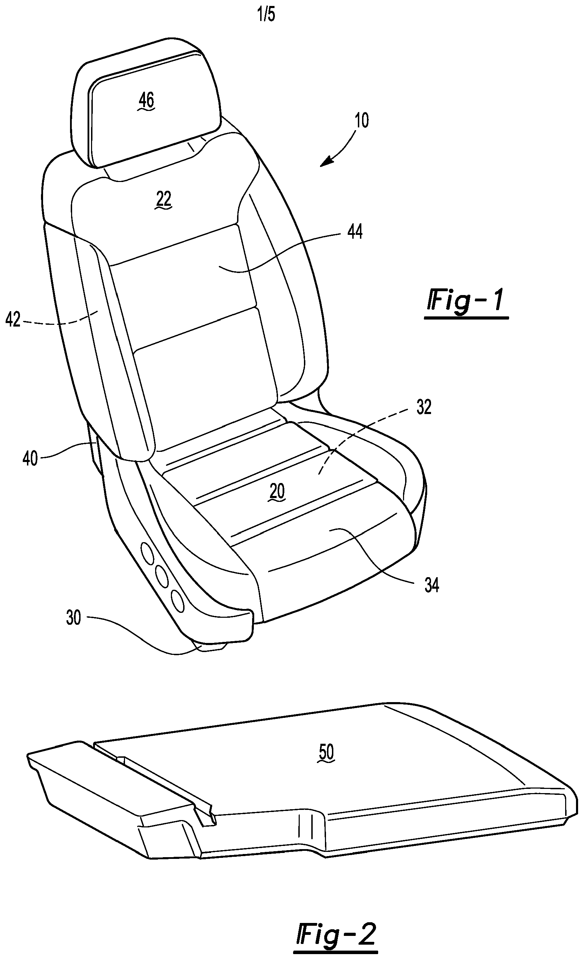

Referring to Figure 1, an example of a seat assembly 10 is shown. In some embodiments, the seat assembly 10 is a vehicle seat assembly, such as for a land vehicle like a car, truck, bus, or the like, or for a non-land vehicle like aircraft or watercraft. For example, a seat assembly 10 for a land vehicle may be shaped and sized as a front row driver or passenger seat, a second, third, or other rear row seat, and may include bench-style seats, bucket seats, or other seat styles. Furthermore, the seat assembly 10 may be a non-stowable seat or a stowable seat that may be foldable and stowable in a cavity in the vehicle floor. Additionally, the seat assembly 10 may be configured for non-vehicle applications such as furniture.

In the configuration shown in Figure 1, the seat assembly 10 includes a seat bottom 20 and a seat back 22. It is contemplated that the seat back 22 may be omitted in some configurations, such as when the seat assembly 10 is configured as a motorcycle seat or stool.

The seat bottom 20 is configured to receive a seated occupant and support the pelvis and thighs of the seat occupant. The seat bottom 20 includes a seat bottom frame 30, a cushion 32, and a trim cover 34.

The seat bottom frame 30 is a structure that supports the cushion 32. The seat bottom frame 30 includes one or more structural members and may be made of any suitable material, such as a metal alloy, polymeric material, fiber reinforced polymeric material, or combinations thereof. In one or more configurations, the seat bottom frame 30 includes a panel, seat pan, suspension mat, or suspension wires upon which the cushion 32 is disposed.

The cushion 32 is disposed on the seat bottom frame 30. The cushion 32 is made of a compliant material that supports the seat occupant and distributes load forces from the seat occupant to the seat bottom frame 30. The cushion 32 and associated methods of manufacture will be discussed in more detail below.

The trim cover 34 covers at least a portion of the cushion 32. In addition, the trim cover 34 provides one or more visible exterior surfaces of the seat back 22. The seat occupant may be disposed on the trim cover 34 when seated upon the seat assembly 10. The trim cover 34 is made of any suitable material or materials, such as fabric, leather, leatherette, vinyl, or combinations thereof. The trim cover 34 may include a plurality of trim panels that are assembled in any suitable manner, such as by fusing or stitching. The trim cover 34 is attached to the seat bottom frame 30, the cushion 32, or both. For example, the trim cover 34 may include trim attachment features that are attached to the seat bottom frame 30, the cushion 32, or both, to inhibit removal of the trim cover 34 and help conform the trim cover 34 to the contour of the seat bottom frame 30, the cushion 32, or both. It is contemplated that different types of trim attachment features may be employed to attach the trim cover 34 to the seat bottom frame 30 than to the cushion 32.

The seat back 22 is configured to support the back of a seated occupant. The seat back 22 is disposed adjacent to the seat bottom 20. For example, the seat back 22 may be disposed above the seat bottom 20 and near the rear side of the seat bottom 20. The seat back 22 extends in a generally upward direction away from the seat bottom 20. In some configurations, the seat back 22 is mounted to the seat bottom 20 and may be pivotable with respect to the seat bottom 20. In other configurations, the seat back 22 is not mounted to the seat bottom 20. For instance, a vehicle seat back may be mounted to the vehicle body structure, such as in some second row seat assemblies. The seat back 22 includes a seat back frame 40, a cushion 42, a trim cover 44, and optionally a head restraint 46.

The seat back frame 40 is a structure that supports the cushion 42. The seat back frame 40 includes one or more structural members and may be made of any suitable material, such as a metal alloy, polymeric material, fiber reinforced polymeric material, or combinations thereof. In one or more configurations, the seat back frame 40 includes a panel, pan, suspension mat, or suspension wires upon which the cushion 42 is disposed. It is also contemplated that the seat back frame 40 may be integrally formed with the seat bottom frame 30.

The cushion 42 is disposed on the seat back frame 40. The cushion 42 is made of a compliant material that supports the seat occupant and distributes load forces from the seat occupant to the seat back frame 40. It is contemplated that the cushion 42 may be integrally formed with the cushion 32 of the seat bottom 20 or separate from the cushion 32 of the seat bottom 20. The cushion 42 and associated methods of manufacture will be discussed in more detail below.

The trim cover 44 covers at least a portion of the cushion 42. In addition, the trim cover 44 provides one or more visible exterior surfaces of the seat back 22. The seat occupant may be disposed on the trim cover 44 when seated upon the seat assembly 10. The trim cover 44 is made of any suitable material or materials, such as fabric, leather, leatherette, vinyl, or combinations thereof. The trim cover 44 may include a plurality of trim panels that are assembled in any suitable manner, such as by fusing or stitching. The trim cover 44 is attached to the seat back frame 40, the cushion 42, or both. For example, the trim cover 44 may include trim attachment features that are attached to the seat back frame 40, the cushion 42, or both, to inhibit removal of the trim cover 44 and help conform the trim cover 44 to the contour of the seat back frame 40, the cushion 42, or both. It is contemplated that different types of trim attachment features may be employed to attach the trim cover 44 to the seat back frame 40 than to the cushion 42.

The head restraint 46, if provided, is configured to support the head of a seat occupant. The head restraint 46 is disposed at the top of the seat back 22 or at an end of the seat back 22 that is disposed opposite the seat bottom 20. The head restraint 46 may be moveable in one or more directions with respect to the seat back 22 or may be integrally formed with the seat back 22.

Referring to Figure 2, an example of a cushion 50 is shown. The cushion is generically designated with reference number 50 for convenience in reference. It is to be understood that the structure and description of the cushion 50 is applicable to the cushion 32 of the seat bottom 20, the cushion 42 of the seat back 22, or both.

The cushion 50 is a non-foam component or includes at least one non-foam component. The non-foam component is primarily referred to as a filament mesh structure but may also be referred to as a mesh cushion, mesh structure, or stranded mesh. In Figure 2, the cushion 50 is depicted as a non-foam component that does not include a foam component or foam material, such as urethane or polyurethane foam; however, it is contemplated that the cushion 50 may also include a foam component or foam material in addition to a non-foam component to provide additional cushioning or localized cushioning for a seat occupant. For example, foam material may be provided between the cushion 50 and a trim cover (e.g., trim cover 34, 44) that is disposed on the cushion 50, within the cushion 50, or combinations thereof. Reducing the amount of foam material that is provided with the cushion 50 or eliminating foam material from the cushion 50 reduces weight and may improve support and comfort of a seat occupant.

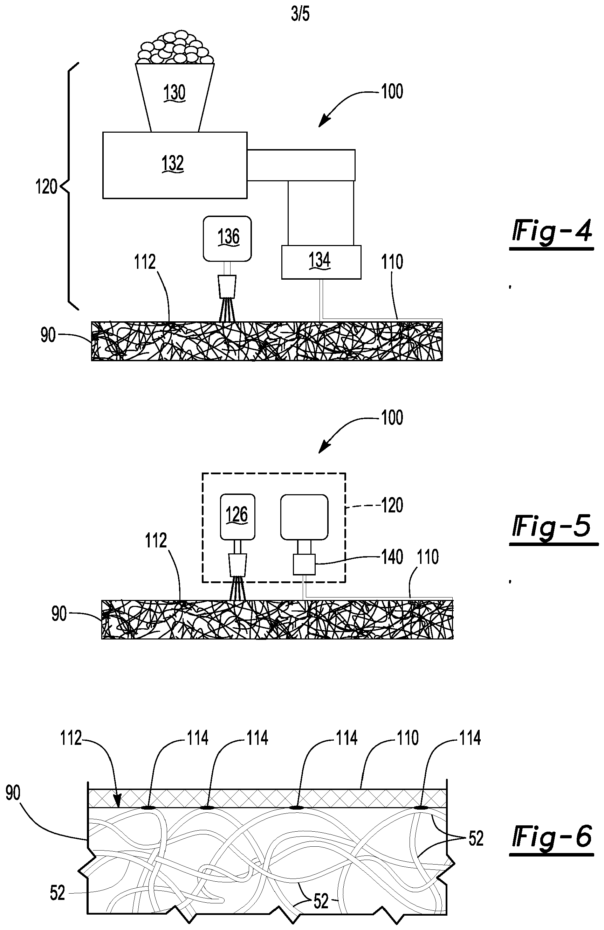

The cushion 50 is described below in the context of a cushion 50 that does not include foam material. In this context, the cushion 50 is made of filaments 52 of polymeric material that are randomly looped, bent, curled, or entangled and are bonded together as will be discussed in more detail below. A magnified view of a cushion 50 with examples of filaments 52 is shown in Figure 6. A filament 52 is directed bonded to another filament 52 rather than being indirectly bonded with a resin or other intermediate material.

The filaments 52, which may also be referred to as strands or threads, are made of any suitable material or materials. In some configurations, the filaments 52 are made of a polymeric material or thermoplastic material, such as a thermoplastic resin that is polyamide-based, polyester-based, polyimide-based, polyolefin-based (e.g., polypropylene-based, polyethylene-based, etc.), polystyrene-based, or combinations thereof. As one example, a polyethylene-based filament may be made of linear low density polyethylene (LLPDE). The filament material may be recyclable unlike foam material or more easily recycled than foam material. It is also contemplated that a filament 52 may comprise reinforcement fibers and that the reinforcement fibers may not be made of a thermoplastic material.

In some configurations, a filament 52 may be a monofilament that is made of a single material. In some configurations, a filament 52 is made of multiple materials. As an example, a filament 52 made of multiple materials may include a core that is made of a first thermoplastic material and a sheath that encircles the core and is made of a second thermoplastic material that differs from the first thermoplastic material. It is contemplated that the cushion 50 may include a combination of monofilaments and filaments that are made of multiple materials and are not monofilaments.

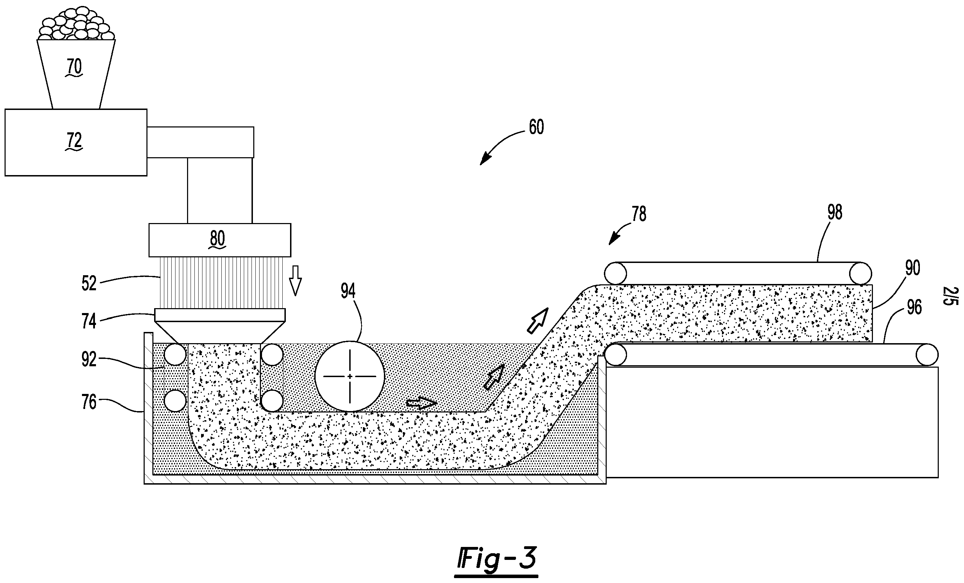

Filaments 52 that are randomly looped, bent, looped, curled, or entangled are bonded together where one filament 52 contacts another filament 52, thereby resulting in a lightweight, air permeable cushion (e.g., cushion 32 and/or 42) or mesh structure having openings or voids between the filaments 52. An example of a manufacturing system 60 of making a cushion or filament mesh structure is also shown in Figure 3. In this example, the manufacturing system 60 includes a material supply 70, an extruder 72, and a funnel 74. The manufacturing system 60 also includes a cooling tank 76 and a material handling subsystem 78.

Referring to Figure 3, the material supply 70 holds material stock that is to be extruded, such as solid beads, flakes, granules, pellets, or powder made of the material. In some configurations, the material supply 70 is configured as a container or hopper. The material supply 70 provides material stock to the extruder 72.

The extruder 72, which may also be referred to as a first tool, melts the material stock and extrudes the material stock into a set of filaments 52. The extruder 72 may have any suitable configuration. In some configurations, the extruder 72 includes a barrel that receives a rotatable screw and heating elements. Rotation of the screw forces the material to move through the barrel and helps heat the material due to the friction generated as the screw rotates. The material exits the barrel under pressure and in a molten state and is transported to a die 80 of the extruder 72.

The die 80, which may also be referred to as a die plate or extrusion die, has multiple through holes or filament forming openings through which the molten material passes. A single filament 52 is extruded from each through hole. The filaments 52 fall downward from the die 80 under the force of gravity into the funnel 74.

The funnel 74 consolidates or groups the filaments 52 into a more compact arrangement in which the filaments bend, curl, or loop and a filament 52 contacts and bonds to at least one other filament 52. The funnel 74 has a funnel inlet and a funnel outlet that is smaller than the funnel inlet. Individual separated filaments 52 enter the funnel inlet. The filaments 52 bend, curl, or loop and move into contact as they accumulate. The filaments 52 move through the funnel 74 toward the funnel outlet. Each member of the set of filaments 52 may be bonded to at least one other member of the set of filaments 52. Bonds are formed between filaments 52 at the points of contact while openings or voids between filaments 52 are present at other locations where one filament 52 does not contact or bond to another filament 52. The entangled and bonded filaments 52 pass through the funnel outlet of the funnel 74 and enter the cooling tank 76. For convenience in reference, the bonded filaments 52 are referred to as a filament mesh structure 90.

The cooling tank 76 holds a liquid, such as water or a mixture of water and another fluid. The liquid in the cooling tank 76 helps support the entangled and bonded filaments 52 to limit further compacting or consolidation of the filaments 52 into a less open or less porous arrangement and maintains a desired porosity and density of the filament mesh structure 90. Thus, the liquid provides some buoyancy or resistance that can result in additional bending, curling, or looping of the filaments 52 adjacent to the surface of the liquid or within the funnel 74 to further build the filament mesh structure 90. The liquid also cools the filaments 52 when the filaments 52 are in the liquid. For instance, the liquid cools the filaments 52 from the outside to solidify the filaments 52 and prevent the filaments 52 from bonding at additional locations. At this point, the filaments 52 are relatively stiff and no longer in a plastic state and thus generally maintain a shape and are not moldable or reformable without being reheated.

The material handling subsystem 78 transports the filament mesh structure 90 through the cooling tank 76. The material handling subsystem 78 includes various rollers and conveyors that help move the filament mesh structure 90 through the liquid and out of the liquid. In some configurations, a tractor conveyor 92 is provided in the cooling tank 76 to help pull the filament mesh structure 90 away from the funnel 74 and to counter buoyancy of the filaments 52.

One or more other rollers, such as roller 94, keep the filament mesh structure 90 submerged in the liquid and guide the filament mesh structure 90 through the cooling tank 76. For example, the roller 94 may guide the filament mesh structure 90 toward a conveyor belt 96 and shaker table 98 that are disposed outside of the cooling tank 76. The shaker table 98 shakes the filament mesh structure 90 while it is on the conveyor belt 96 to remove liquid. Alternatively or in addition, the filament mesh structure 90 may be squeezed to remove liquid, air may be blown toward the filament mesh structure 90 to remove liquid, or both. It is also contemplated that the filament mesh structure 90 may also be allowed to drip dry, or dry in ambient air.

The manufacturing system 60 described above is a continuous flow process in which the filament mesh structure 90 is formed as a continuous structure when filament extrusion is not interrupted. Further processing of the filament mesh structure 90 is provided after exiting the cooling tank 76 to cut the filament mesh structure 90 into individual pieces or blanks for individual cushions. Such processing is conducted by a cutting subsystem of the manufacturing system 60. The cutting subsystem may be of any suitable type. For instance, the cutting system may employ a blade, knife, hot knife, saw, fluid jet, or the like to cut the filaments 52 of the filament mesh structure 90 into a blank.

The manufacturing system 60 also includes a layer dispensing subsystem 100, examples of which are shown in Figures 4 and 5. The layer dispensing subsystem 100 may be part of the continuous flow process of the manufacturing system 60 and may be provided downstream from the cooling tank 76, such as after the shaker table 98. Thus, the layer dispensing subsystem 100 may dispense material onto the filament mesh structure 90 before the filament mesh structure 90 is cut into pieces. In some embodiments, the layer dispensing subsystem 100 is configured to dispense material onto a piece or blank of the filament mesh structure 90 that has been cut by the cutting subsystem.

The layer dispensing subsystem 100 dispenses a layer 110 of material on one or more sides 112 of the filament mesh structure 90. The layer 110 may be made of any suitable material or materials. In some embodiments, the layer 110 is made of the same material as the filament mesh structure 90 or the filaments 52 of the filament mesh structure 90. Using a common material for the layer 110 and the filament mesh structure 90 or different materials with similar melting points may promote bonding of the layer 110 to the filament mesh structure 90.

In Figure 6, a magnified view of a portion of the filament mesh structure 90 with a layer 110 disposed on and bonded to the filament mesh structure 90 is shown. Examples of bonds at points where the layer 110 contacts filaments 52 of the filament mesh structure 90 are designated with reference number 114.

The layer dispensing subsystem 100 employs a second tool 120 that differs from the first tool or extruder 72 that extrudes the set of filaments of the filament mesh structure 90. The second tool 120 dispenses the layer 110. In some configurations, the layer dispensing subsystem 100 includes a material supply 130 and an extruder 132, similar to the material supply 70 and the extruder 72 previously discussed. The layer 110 may be dispensed in a molten state. In some configurations, the layer dispensing subsystem 100 includes a heating device 136. The layer dispensing subsystem 100 may omit a funnel and the cooling tank.

The material supply 130 holds material that forms the layer 110. In some configurations, the material supply 130 holds material that is to be extruded to form the layer 110, such as solid beads, flakes, granules, pellets or powder made of the material. In other configurations, the material supply 130 includes or holds material that is not extruded to form the layer 110. For instance, the material supply 130 may dispense a layer 110 from a roll. In some embodiments, the layer 110 is a pre-manufactured film or thin sheet of flexible material that is dispensed by unwinding the film from the roll onto the filament mesh structure 90. In such a configuration, it is contemplated that the extruder 132 may be omitted.

The extruder 132, if provided, melts the material stock and extrudes the material stock into the layer 110. The extruder 132 may have a similar configuration and may operate in a similar manner as the extruder 72 previously discussed. The layer 110 that is dispensed by the extruder 132 is configured as one or more filaments, a film, or both, examples of which will be discussed in further detail below. In some configurations, the extruder 132 provides material in a molten state to a die 134 that has one or more through holes or forming openings through which the molten material passes, thereby extruding a layer 110 as a film or filament. The layer 110 falls downward under the force of gravity onto the filament mesh structure 90.

In some configurations, the layer dispensing subsystem 100 and the second tool 120 are stationary and the filament mesh structure 90 moves with respect to the layer dispensing subsystem 100. For instance, the filament mesh structure 90 may be disposed on a conveyor that moves the filament mesh structure 90 with respect to the second tool 120.

In some configurations, the layer dispensing subsystem 100 and the second tool 120 move with respect to the filament mesh structure 90. For instance, the second tool 120 may be disposed on a moveable platform or robotic manipulator that may move with respect to the filament mesh structure 90, thereby allowing the layer 110 to be dispensed at a desired location or in a desired pattern upon the filament mesh structure 90.

In some configurations, the layer dispensing subsystem 100 is handheld or manually operated. For instance, the second tool 120 may be a handheld device, such as a dispensing gun or extrusion welder, which may dispense the layer 110 through an outlet, such as a nozzle 140. The material supply 130 may be mounted to the second tool 120 or may be remotely positioned from the second tool 120. The nozzle 140 of the second tool 120 may be positioned near a side 112 of the filament mesh structure 90 upon which the layer 110 is to be dispensed. A switch or trigger on the second tool 120 may be actuated to operate the second tool 120 and to dispense the layer 110 from the nozzle 140. The layer 110 may be dispensed as one or more filaments or a film as previously discussed.

The heating device 136, if provided, provides thermal energy that reheats the filament mesh structure 90. The term "reheats" is employed since the filaments 52 of the filament mesh structure 90 were previously heated when the filaments 52 were looped and bonded. The heating device 136 may be of any suitable type. For instance, the heating device 136 may blow or direct a heated fluid, such as air, against the filament mesh structure 90, may direct electromagnetic radiation toward the filament mesh structure 90, or the like. In some configurations, the heating device 136 reheats the filament mesh structure 90 before the layer 110 is bonded to the filament mesh structure 90. In some configurations, the heating device 136 heats the filaments 52 to a temperature that approaches the melting temperature of the filaments 52, such as 5 to 50°C below the melting temperature.

In some configurations, the heating device 136 is disposed upstream from the extruder 132 and heats filaments 52 of the filament mesh structure 90 shortly before or simultaneously with dispensing of the layer 110 onto the filament mesh structure 90. In some configurations, the heating device 136 is separate from the second tool 120 that dispenses the layer 110, such as is shown in Figure 4. In other configurations, the heating device 136 is provided with the second tool 120 as represented by the dashed line representing the second tool 120 in Figure 5. It is contemplated that the heating device 136 may provide the layer 110 and a heated gas through adjacent nozzles.

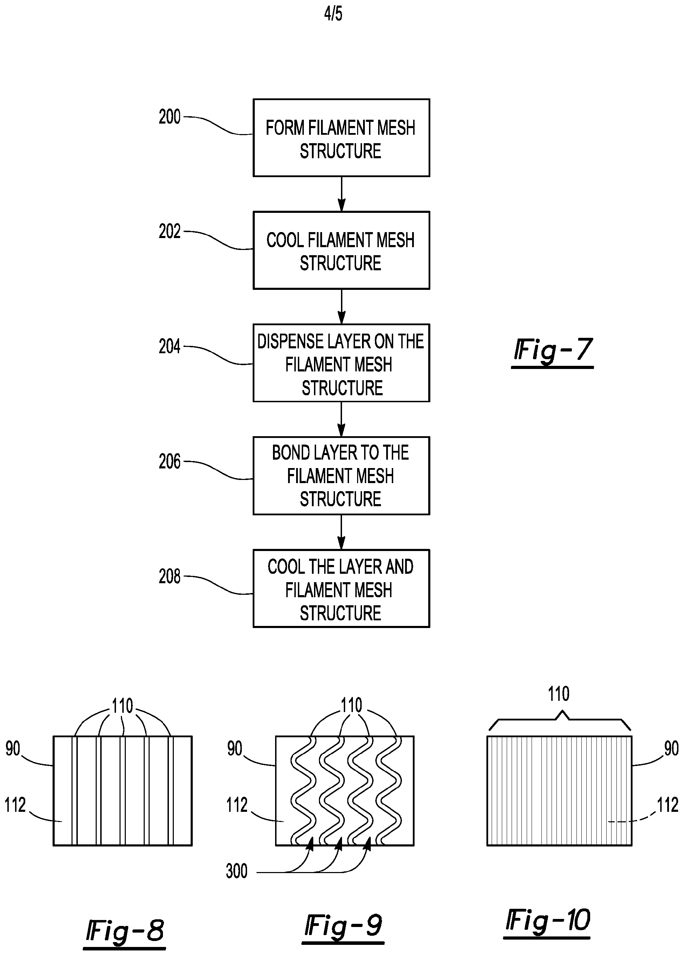

Referring to Figure 7, an example of a method of making a cushion is shown. The cushion is manufactured with the manufacturing system 60.

At block 200, the filament mesh structure 90 is formed. The filament mesh structure 90 is formed by extruding filaments 52 with the extruder 72, and bending, curling, or looping the filaments 52 so that each filament 52 contacts and bonds to at least one other filament 52 as previously described.

At block 202, the filament mesh structure 90 is cooled to set a shape of the filament mesh structure 90. The filament mesh structure 90 may be cooled with liquid in the cooling tank 76 as previously discussed.

At block 204, the layer 110 is dispensed onto the filament mesh structure 90. The layer 110 is dispensed with the layer dispensing subsystem 100 as previously discussed. The layer 110 is dispensed onto one or more sides 112 of the filament mesh structure 90 such that the layer 110 contacts one or more filaments 52 the filament mesh structure 90.

At block 206, the layer 110 bonds to at least some members of the set of filaments 52 of the filament mesh structure 90. For instance, the layer 110 may contact a filament 52 of the filament mesh structure 90 and transfer heat to a filament 52. As a result, the transferred heat partially melts the filament 52 and forms a localized bond 114 that adheres or attaches the layer 110 to the filament 52 at the point of contact. Filaments 52 or regions of filaments of the filament mesh structure 90 that do not contact the layer 110 are not melted, thereby allowing the filament mesh structure 90 to maintain or substantially maintain its shape without creating new bonds from one filament 52 to another filament 52 or from one filament 52 to itself.

At block 208, the layer 110 and the filament mesh structure 90 are cooled. The layer 110 and the filament mesh structure 90 may be cooled in any suitable manner. In some configurations, the layer 110 and the filament mesh structure 90 are cooled with a gas, such as air. It is also contemplated that the layer 110 and the filament mesh structure 90 may be cooled with a liquid, such as water or a mixture including water. Cooling the layer 110 and the filament mesh structure 90 solidifies the bonds between the layer 110 and the filament mesh structure 90. At this point, the layer 110 and the filaments 52 are no longer in a plastic state and thus generally maintain a shape when unloaded and are not moldable or reformable without being reheated.

Various examples of layers 110 will now be described with reference to Figures 8 through 15c. In these figures, the filament mesh structure 90 is depicted as a rectangular block with flat sides for simplicity; however, it is to be understood that the filament mesh structure 90 may have a non-rectangular configuration with sides or portions of sides that are contoured or curved. Protrusions, recesses, or combinations thereof may be provided with one or more sides. Some examples of recesses include holes grooves, slits, trenches, and the like. It is also to be understood that a side 112 of the filament mesh structure 90 is defined by portions of multiple filaments 52 that are disposed along a common exterior region or exterior boundary of the filament mesh structure 90 and that openings or voids will be present along a side between filaments 52 a locations where one filament 52 does not contact another filament 52. In addition, sides of the filament mesh structure 90 are designated with reference number 112 in these figures but not all sides are labeled for clarity.

Referring to Figures 8-10, examples of a layer 110 that comprises one or more filaments are shown. The filaments of the layer 110 are referred to as a second set of filaments to distinguish from the set of filaments 52 of the filament mesh structure 90.

In Figure 8, the layer 110 includes a second set of filaments that have a linear configuration. A gap 300 is provided between adjacent members of the second set of filaments. In the configuration shown, the gap 300 separates adjacent members of the second set of filaments such that members of the second set of filaments do not contact each other. It is also contemplated that a member of the second set of filaments may contact at least one other member of the second set of filaments at one or more discrete points. In such a configuration, the gap is provided between adjacent members of the second set of filaments where one member of the second set of filaments does not contact an adjacent member of the second set of filaments.

In Figure 9, the layer 110 includes a second set of filaments that have a nonlinear configuration. A nonlinear configuration may be provided by employing relative movement between the layer dispensing subsystem 100 and the filament mesh structure 90 when the layer 110 is dispensed. For example, the layer dispensing subsystem 100 may move along a nonlinear path with respect to the filament mesh structure 90, the filament mesh structure 90 may move along a nonlinear path or multiple axes with respect to the layer dispensing subsystem 100, or the layer dispensing subsystem 100 and the filament mesh structure 90 may move in different directions with respect to each other to provide a second set of filaments that have a nonlinear configuration. A gap 300 is provided between adjacent members of the second set of filaments. In the configuration shown, the gap 300 separates adjacent members of the second set of filaments such that members of the second set of filaments do not contact each other. It is also contemplated that a member of the second set of filaments may contact at least one other member of the second set of filaments at one or more discrete points. It is contemplated that the layer 110 may include filaments having linear and non-linear segments or a combination of linear and nonlinear filaments.

In Figure 10, the layer 110 includes a second set of filaments that are contiguous. In this configuration, each member of the second set of filaments is in continuous contact with an adjacent member of the second set of filaments. Such a configuration may provide a layer 110 that does not have gaps between members of the second set of filaments. As a result, the layer 110 may be air impermeable. In Figure 10, the layer 110 is depicted with linear filaments; however, it is contemplated that the filaments of the layer 110 may be nonlinear or include nonlinear segments in one or more configurations.

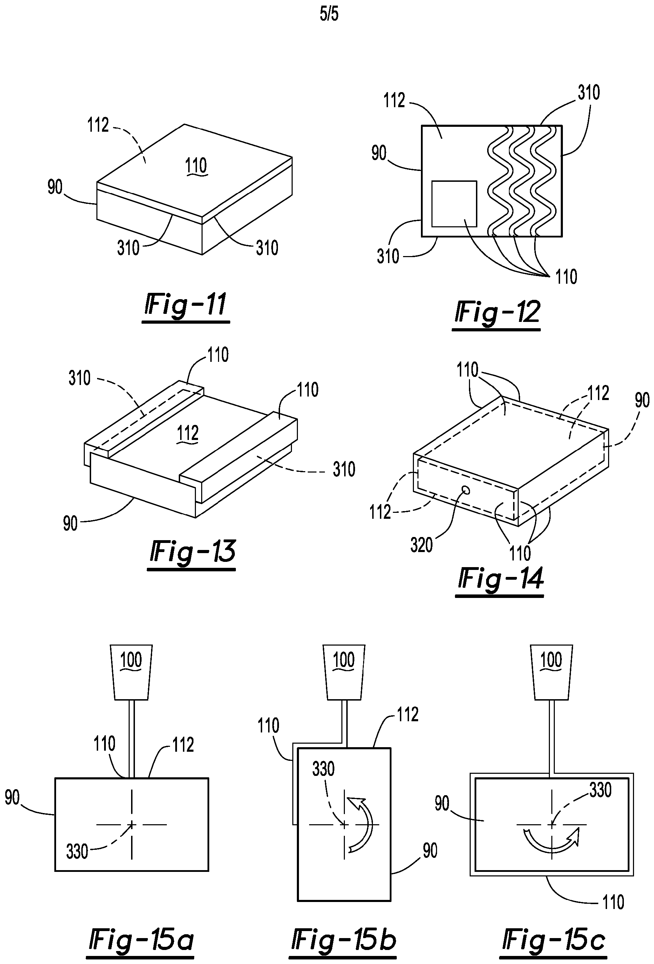

In Figure 11, the layer 110 comprises a film (e.g., thin flexible sheet of material) rather than individual filaments. In some configurations, a layer 110 that comprises a film is air permeable, such as when the film has one or more pores or openings. Such a configuration may allow air to pass through the layer 110, which may facilitate ventilation of the cushion. For instance, such a configuration may be provided with a ventilated seat that allows heated or cooled air to pass through the filament mesh structure 90 and the layer 110 under negative pressure (i.e., suction) or positive pressure to heat or cool an object or occupant disposed on the cushion. In some configurations, a layer 110 that comprises a film is air impermeable. In Figure 11, the layer 110 is illustrated as extending completely across and covering a side of the filament mesh structure 90. As such, the layer 110 extends from one edge 310 of the filament mesh structure 90 to another edge 310. In some configurations, the layer 110 is disposed on and extends across a portion of a side of the filament mesh structure 90. In some configurations the layer 110 extends across multiple sides of the filament mesh structure 90 or portions of multiple sides of the filament mesh structure 90.

In Figure 12, the layer 110 includes a film and filaments. The film of the layer 110 is depicted with a rectilinear shape and is spaced apart from the edges 310 of the side of the filament mesh structure 90 upon which the film is disposed; however, it is contemplated that the film may extend from an edge and may be provided with a different shape. The filaments of the layer 110 are depicted with a nonlinear configuration similar to Figure 9; however, it is contemplated that the filaments of the layer 110 may be linear, may include combinations of linear and nonlinear filaments, may include contiguous filaments, may include filaments that contact or extend from the film of the layer 110, or combinations thereof. Providing the layer 110 as a film that is disposed on a portion of a side of the filament mesh structure 90, an entire side of the filament mesh structure 90, or multiple sides of the filament mesh structure 90 may provide a surface upon which a barcode or other identification markings may be printed or applied to identify product characteristics, such as the manufacturing date, lot number, part number, and the like. Such identification markings may be difficult to provide directly on the filaments 52 of the filament mesh structure 90.

In Figure 13, the layer 110 is disposed on multiple sides of the filament mesh structure 90 but not all sides of the filament mesh structure 90. The filament mesh structure 90 has multiple sides, may be referred to as a set of sides. The layer 110 is depicted as being disposed on two members of the set of sides of the filament mesh structure 90 and extending over an edge 310 of the filament mesh structure 90. Providing the layer 110 at or over an edge 310 may help provide reinforcement and stiffen the cushion where sides of the filament mesh structure 90 intersect or where different contours of the filament mesh structure 90 meet.

In Figure 14, the layer 110 is disposed on all sides of the filament mesh structure 90. As such, the layer 110 may encapsulate the filament mesh structure 90. In some configurations, the layer 110 or a portion thereof is air impermeable. In some configurations, such as when the layer 110 is air impermeable, at least one port 320 is provided in the layer 110. The port 320 permits air to enter and exit the filament mesh structure 90. Providing a port 320 through an air impermeable layer 110 that encapsulates the filament mesh structure 90 allows the air pressure inside the layer 110 to be modified with respect to the surrounding environment. For instance, air may be provided through the port 320 into the filament mesh structure 90 to increase the internal pressure or inflate the cushion. Air may exit the filament mesh structure 90 via the port 320 to decrease the internal pressure or deflate the cushion. Decreasing the pressure allows the layer 110 to act as a vacuum bag in which the internal pressure may be decreased to pull the layer 110 more tightly against the filament mesh structure 90, which may help maintain the positioning of the layer 110 with respect to the filament mesh structure 90 and to help maintain the position of a component that is attached to the layer 110, such as a trim cover. The port 320 may be closed or sealed to maintain the internal pressure after a desired internal pressure is obtained.

The layer 110 may be dispensed on multiple sides of the filament mesh structure 90 in multiple ways.

In Figures 15a-15c, an example of dispensing the layer 110 is shown that includes rotating the filament mesh structure 90 with respect to the layer dispensing subsystem 100. Only a portion of the layer dispensing subsystem 100 is shown in these figures for clarity.

In Figure 15a, the filament mesh structure 90 is shown in an initial position in which the layer 110 is being dispensed upon a first side of the filament mesh structure 90. The layer 110 bonds to the first side of the filament mesh structure 90 where the layer 110 contacts the filaments 52 of the filament mesh structure 90. As the layer 110 is dispensed the filament mesh structure 90 is then rotated, such as about an axis 330, to extend the layer 110 along the first side and optionally additional sides of the filament mesh structure 90. This is best understood by comparing Figures 15a and 15b.

In Figure 15b, the filament mesh structure 90 is shown rotated 90° clockwise about the axis 330 from the position shown in Figure 15a. This rotation allows the layer 110 to extend along a portion of the first side as the filament mesh structure 90 rotates and then begin to extend across a second side of the filament mesh structure 90 when the second side is aligned with and positioned below the location from which the layer 110 is being dispensed by the layer dispensing subsystem 100. Accordingly, the layer 110 is dispensed on additional sides of the filament mesh structure 90 after dispensing the layer 110 on the first side and bonding the layer 110 to the first side of the filament mesh structure 90.

In Figure 15c, the filament mesh structure 90 is shown rotated 360° counterclockwise about the axis 330 from the position shown in Figure 15a so that the layer 110 wraps around the filament mesh structure 90 and meets with the initial location at which the layer 110 was dispensed on the first side of the filament mesh structure 90. Dispensing of the layer 110 may be stopped if overlap is not desired.

In some configurations, a cooling fluid, such as air, may be blown against the layer 110 after the layer 110 bonds to the filament mesh structure 90 to promote solidification of the bonds into help maintain the positioning of the layer 110 when the filament mesh structure 90 is rotated. It is also contemplated that the rate at which the layer 110 is dispensed and the rate at which the filament mesh structure 90 is rotated may be sufficiently slow to permit solidification of the bonds between the layer 110 in the filament mesh structure 90 to sufficiently solidify without the use of a cooling fluid that is blown against the layer 110.

In some configurations, it is contemplated that the filament mesh structure 90 may be rotated about another axis to dispense the layer 110 along an additional side of the filament mesh structure 90. For instance, a filament mesh structure 90 configured as a rectangular block may be rotated about an axis that is perpendicular to axis 330 to dispense the layer 110 along one or more sides of the filament mesh structure 90 through which the axis 330 extends.

Clause 1. A cushion comprising: a filament mesh structure comprising a set of filaments, wherein each member of the set of filaments is looped and bonded to at least one other member of the set of filaments, the filament mesh structure defining a first side; and a layer that is disposed on the first side and bonded to at least some members of the set of filaments.

Clause 2. The cushion of clause 1 wherein the layer comprises a second set of filaments.

Clause 3. The cushion of clause 2 wherein a gap is provided between adjacent members of the second set of filaments.

Clause 4. The cushion of clause 2 wherein the second set of filaments is contiguous.

Clause 5. The cushion of clause 1 wherein the layer comprises a film.

Clause 6. The cushion of clause 5 wherein the film is air impermeable.

Clause 7. The cushion of any preceding clause wherein the layer is disposed on a portion of the first side.

Clause 8. The cushion of clause 7 wherein the layer extends from an edge of the first side.

Clause 9. The cushion of any preceding clause wherein the filament mesh structure comprises a set of sides, wherein the first side is a member of the set of sides and the layer is provided on at least one member of the set of sides in addition to the first side.

Clause 10. The cushion of any one of clauses 2, 5, and 6, and any one of clauses 7 to 9 when dependent on any one of clauses 2, 5 and 6 wherein the layer is air impermeable and a port is provided in the layer that permits air to enter and exit the filament mesh structure.

Clause 11. The cushion of clause 10 wherein the filament mesh structure comprises a set of sides, the first side is a member of the set of sides, and the layer is provided on all members of the set of sides.

Clause 12. A method comprising: extruding a set of filaments; looping and bonding each member of the set of filaments to at least one other member of the set of filaments to form a filament mesh structure; cooling the filament mesh structure to set a shape of the filament mesh structure; dispensing a layer on a first side of the filament mesh structure; and bonding the layer to the first side.

Clause 13. The method of clause 12 wherein dispensing the layer includes dispensing the layer in a molten state.

Clause 14. The method of any one of clauses 12 to 13 further comprising reheating the filament mesh structure before bonding the layer.

Clause 15. The method of any one of clauses 12 to 14 wherein the layer is air permeable.

Clause 16. The method of any one of clauses 12 to 15 wherein the filament mesh structure and the layer are made of the same material.

Clause 17. The method of any one of clauses 12 to 16 wherein the layer includes a second set of filaments that bond to the filament mesh structure where members of the second set of filaments contact the filament mesh structure.

Clause 18. The method of any one of clauses 12 to 17 wherein extruding the set of filaments includes extruding the set of filaments with a first tool and dispensing the layer includes dispensing the layer with a second tool.

Clause 19. The method of any one of clauses 12 to 18 further comprising rotating the filament mesh structure after bonding the layer to the first side and dispensing the layer on and bonding the layer to a second side of the filament mesh structure.

Clause 20. The method of any one of clauses 12 to 19 further comprising rotating the filament mesh structure after bonding the layer to the first side and dispensing the layer on and bonding the layer to additional sides of the filament mesh structure, thereby forming an air impermeable layer around the filament mesh structure.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A cushion comprising:
a filament mesh structure comprising a set of filaments, wherein each member of the set of filaments is bonded to at least one other member of the set of filaments, the filament mesh structure defining a first side; and
a layer that is disposed on the first side and bonded to at least some members of the set of filaments.

2. The cushion of claim 1 wherein the layer comprises a second set of filaments.

3. The cushion of claim 2 wherein a gap is provided between adjacent members of the second set of filaments.

4. The cushion of claim 2 or 3 wherein the second set of filaments is contiguous.

5. The cushion of any of the preceding claims, wherein the layer comprises a film, wherein preferably the film is air impermeable.

6. The cushion of any of the preceding claims, wherein the layer is disposed on a portion of the first side, wherein preferably the layer extends from an edge of the first side.

7. The cushion of any of the preceding claims, wherein the filament mesh structure comprises a set of sides, wherein the first side is a member of the set of sides and the layer is provided on at least one member of the set of sides in addition to the first side.

8. The cushion of any of the preceding claims, wherein the layer is air impermeable and a port is provided in the layer that permits air to enter and exit the filament mesh structure, wherein preferably the filament mesh structure comprises a set of sides, the first side is a member of the set of sides, and the layer is provided on all members of the set of sides.

9. A method comprising:
extruding a set of filaments;
looping and bonding each member of the set of filaments to at least one other member of the set of filaments to form a filament mesh structure;
cooling the filament mesh structure to set a shape of the filament mesh structure;
dispensing a layer on a first side of the filament mesh structure; and
bonding the layer to the first side.

10. The method of claim 9, wherein dispensing the layer includes dispensing the layer in a molten state, and/or wherein the method comprises reheating the filament mesh structure before bonding the layer.

11. The method of claim 9 or 10, wherein the layer is air permeable.

12. The method of any of claims 9 to 11, wherein the filament mesh structure and the layer are made of the same material.

13. The method of any of claims 9 to 12, wherein the layer includes a second set of filaments that bond to the filament mesh structure where members of the second set of filaments contact the filament mesh structure.

14. The method of any of claims 9 to 13, wherein extruding the set of filaments includes extruding the set of filaments with a first tool and dispensing the layer includes dispensing the layer with a second tool.

15. The method of any of claims 9 to 14, further comprising rotating the filament mesh structure after bonding the layer to the first side and dispensing the layer on and bonding the layer to either a second side of the filament mesh structure, or to additional sides of the filament mesh structure, thereby forming an air impermeable layer around the filament mesh structure.
